# EUROPÄISCHE PATENTSCHRIFT

(11) **EP 2 383 230 B1**
(45) Veröffentlichungstag und Bekanntmachung des Hinweises auf die Patenterteilung: **27.12.2017**
(21) Anmeldenummer: 11163968.8
(22) Anmeldetag: 27.04.2011
(51) Int. Cl.: C02F 1/461, C02F 1/463, C02F 101/10

(54) **VORRICHTUNG UND VERFAHREN ZUR PHOSPHATIONENBINDUNG DURCH ANODISCHE METALLAUFLÖSUNG**
DEVICE AND METHOD FOR PHOSPHATION RELEASE BY MEANS OF ANODAL METAL SOLUTION
DISPOSITIF ET PROCÉDÉ DE LIAISON D'IONS PHOSPHATE PAR DISSOLUTION DE MÉTAL ANODIQUE

(30) Priorität: 28.04.2010 AT 7052010
(43) Veröffentlichungstag der Anmeldung: 02.11.2011
(73) Patentinhaber: Wesner, Wolfgang, 1050 Wien (AT); Weiermayer, Siegfried, 4553 Oberschlierbach (AT); Schardt, Werner, 4571 Steyrling (AT); Schardt, Christian, 4643 Pettenbach (AT); Kurzmann, Heimo, 5302 Henndorf (AT)
(72) Erfinder: Wesner, Wolfgang, 1050 Wien (AT); Weiermayer, Siegfried, 4553 Oberschlierbach (AT); Schardt, Werner, 4571 Steyrling (AT); Schardt, Christian, 4643 Pettenbach (AT); Kurzmann, Heimo, 5302 Henndorf (AT)
(74) Vertreter: Vinazzer, Edith

(56) Entgegenhaltungen:
- EP-A2- 1 266 865
- FR-A1- 2 751 637

## Beschreibung

Die Erfindung betrifft eine Vorrichtung zur Phosphationenbindung in Wasser durch anodische Metallauflösung mit einer in einem Gehäuse befindlichen und vom aufzubereitenden Wasser durchströmbaren Elektrolysezelle, in welche zwischen zwei elektrisch kontaktierbaren Elektroden ein Bett aus Metallpartikeln eingebracht ist, welche voneinander durch Abstandhalter aus einem elektrisch isolierenden Material separiert sind. Die Erfindung betrifft ferner ein Verfahren zur Phosphationenbindung in Wasser durch anodische Metallauflösung unter Verwendung einer vom aufzubereitenden Wasser durchströmbaren Elektrolysezelle, in welcher sich zwischen den elektrisch kontaktierten Elektroden eine Schüttung aus Metallpartikeln befindet, welche vom Wasser anströmbar und voneinander durch Abstandhalter aus einem elektrisch isolierenden Material separiert sind.

Die FR 2751637 A1 offenbart eine Elektrolysezelle, in welcher zwischen zwei elektrisch kontaktierten Elektroden, einer Anode und einer Kathode, zumindest eine nicht kontaktierte Zwischenelektrode vorgesehen ist. Zumindest einige der Zwischenelektroden sind jeweils durch einen Korb gebildet, welcher mit Metallteilchen in loser Schüttung gefüllt ist. Aus der US 5 3 72 690 A sind ein Verfahren und eine Vorrichtung zur Beseitigung von Verunreinigungen in einem wässrigen Medium bekannt, wobei die Vorrichtung eine vom aufzubereitenden Wasser durchströmte Elektrolysezelle mit zwei elektrisch kontaktierbaren Elektroden, zwischen welchen sich ein Bett aus Metallpartikeln befindet, aufweist. Diese, sich im Gebrauch auflösenden Metallpartikel bestehen beispielsweise aus Stahl, Aluminium oder Magnesium. Um elektrische Kurzschlüsse zu vermeiden, sind die Metallpartikel mit einer Beschichtung, beispielsweise aus Aluminiumoxid, ummantelt. Diese Ummantelung soll derart dünn sein, dass die Halogenidionen in der Lösung die Beschichtung durchdringen können. Aus der US 4 517 067 A ist ein elektrochemischer bipolarer Reaktor zur Aufbereitung von Industrieabwässern bekannt. Die als Schüttung eingebrachten elektrisch leitenden Teilchen bestehen aus Graphit und sind teilweise mit einem nichtleitenden Material umhüllt. Dadurch werden die Teilchen voneinander elektrisch isoliert.

Bei der aus der DE 20 2008 003027 U1 bekannten Vorrichtung ist in einem Zellkasten aus elektrisch isolierendem Material ein vom zum behandelnden Wasser von unten nach oben durchflossenes Bett aus Metallgranulat auf einer elektrisch leitenden, mit Isolierstoffdüsen versehenen Elektrodenplatte als Stormzuführung zum Metallgranulat angeordnet. Es sind zumindest zwei mit Gaszufuhreinrichtungen verbundene Gasinjektoren für die Zufuhr von Treibgas vorgesehen, um durch unter Druck zugeführte Luft die Metallpartikel ständig in Bewegung zu halten. Dieses bekannte Verfahren ist mit einem hohem Energieaufwand, einem hohen technischen Aufwand und einer gewissen Wärmeentwicklung verbunden. Die DE 102 07 611 A1 betrifft ein Verfahren zur Ausfällung von Phosphaten aus Abwasser, insbesondere von Abwasser in Klärwerken, mit Hilfe von Kationen, welche mit den Phosphaten eine schwerlösliche oder unlösliche Verbindung eingehen. Die Kationen werden von einer Opferanode zur Verfügung gestellt, welche in Lösung geht. Bei dem aus der DE 198 19 303 A1 bekannten Verfahren zur Eliminierung von Phosphat aus Abwasser werden die zur Fällung des Phosphates erforderlichen Eisen- oder Alluminiumionen durch Elektrolyse des Abwassers mittels von elektrischem Strom beaufschlagten Eisen- und/oder Alluminuimelektroden gebildet. Die Anlage weist ein durchströmtes Elektrodenpaket auf, wobei die Eisen- oder Alluminiumionen durch Anlegen von Gleichspannung oder einer umpolbaren Gleichspannung freigesetzt werden. Die GB 950,482 A befasst sich mit der Aufbereitung von Swimmingpoolwasser durch Elektroflockulation in Kombination mit einer Zentrifugation zur Abtrennung der ausgefällten Produkte und einer Desinfektion durch aufgelöste Silberionen. Die Elektroden bestehen aus konzentrisch angeordneten Rohren oder parallel angeordneten Metallplatten. Die US 2009008269 A1 beschreibt eine Elektroflockulationszelle mit besonders großer Oberfläche und geringem Elektrodenabstand. Das Anodenblech und das Kathodenblech werden mittels Abstandhalter voneinander isoliert und spiralig gewickelt, sodass eine zylinderförmige Elektrodeneinheit entsteht, welche in einem mit dem zu behandelnden Wasser durchströmten Rohr angeordnet wird.

Der Erfindung liegt die Aufgabe zu Grunde, ein Verfahren und eine Vorrichtung der eingangs genannten Art zur Verfügung zu stellen, mit welchem bzw. mit welcher eine Phosphationenbindung in Wasser, welches eine geringe elektrische Leitfähigkeit aufweist, unter Anwendung von kleinen elektrischen Spannungen möglich ist, wobei über einen langen Zeitraum wartungsfrei eine effiziente Metallauflösung sichergestellt sein soll.

Gelöst wird die gestellte Aufgabe erfindungsgemäß dadurch, dass die Metallpartikel entweder jeweils von einem verschweißten Kunststoffgitter ummantelt sind oder an ihren Oberflächen mit anhaftenden Kunststoffteilchen oder Keramikteilchen versehen sind.

Durch die erfindungsgemäßen Ausführungen der Abstandhalter bleibt der Abstand zwischen den als bipolare Elektroden wirkenden Metallpartikeln über deren Lebensdauer weitgehend konstant, ihr gegenseitiger Abstand wird ja durch die Dicke der elektrisch isolierenden Abstandhalter bestimmt. Derart voneinander isolierte Metallpartikel sind ferner von Wasser gut durchströmbar. Es ist weiters eine Stromquelle mit kleinem elektrischen Potential ausreichend, um die für eine effiziente Phosphationenbindung erforderliche anodische Auflösung der Metallpartikel zu erzielen.

Das erfindungsgemäße Verfahren ist dadurch gekennzeichnet, dass die Metallpartikel entweder jeweils von einem verschweißten Kunststoffgitter ummantelt sind oder an ihren Oberflächen mit anhaftenden Kunststoffteilchen oder Keramikteilchen versehen sind, und dass die Elektroden mit Wechselstrom versorgt werden, wobei die Wechselstromfrequenz in Abhängigkeit vom Phosphatgehalt des Wassers variiert wird.

Bei einer bevorzugten Ausführungsform der Erfindung bilden die Metallpartikel eine lose Schüttung. Eine Schüttung ist vom zu behandelnden Wasser gut durchströmbar und kann leicht ausgetauscht werden.

Als Kunststoff für die Abstandhalter kommen bei sämtlichen Ausführungsvarianten insbesondere Polypropylen oder Polyethylen in Frage.

Die zur Fällung der Phosphationen erforderlichen Metallionen werden von den Kontaktelektroden und den Metallpartikeln zur Verfügung gestellt, insbesondere indem sowohl die Metallpartikel als auch die Kontaktelektroden zumindest eines der Elemente Eisen oder Aluminium enthalten.

Bei einer besonders vorteilhaften Ausführungsvariante der Erfindung enthalten die Metallpartikel und/oder die Kontaktelektroden eines oder mehrere der Metalle Kalzium, Lanthan, Magnesium, Kupfer oder Silber oder eine Legierung dieser Metalle. Darüber hinaus ist es möglich, dass die Metallpartikel und/oder die Kontaktelektroden zumindest ein Nichtmetall, insbesondere Stickstoff oder Kohlenstoff, oder zumindest eine organische Kohlenstoffverbindung oder zumindest ein organisches oder anorganisches Salz enthalten. Diese Maßnahmen gestatten es, zusätzlich eine Konservierung, Desinfektion, Algenbekämpfung oder Düngung des Wassers durchführen zu können.

Die Elektroden werden erfindungsgemäß mit Wechselstrom oder mit umgepoltem Gleichstrom versorgt.

Besonders vorteilhaft ist es, wenn die Wechselstromfrequenz in Abhängigkeit vom Phosphatgehalt des Wassers variiert wird. Auf diese Weise kann die Menge an netto aufgelösten Metallionen reguliert werden. Die Wechselstromfrequenz sollte zwischen 1 Hz und 100 Hz einstellbar sein.

Weitere Merkmale, Vorteile und Einzelheiten der Erfindung werden nun anhand der schematischen Zeichnung, welche Ausführungsbeispiele darstellt, näher beschrieben. Dabei zeigen
Fig. 1 eine Ansicht einer Ausführungsvariante eines Partikels eines Metallgranulats gemäß der Erfindung,
Fig. 2 eine Ansicht einer weiteren Ausführungsform eines Partikels eines Metallgranulats gemäß der Erfindung und
Fig. 3 eine Prinzipdarstellung einer erfindungsgemäßen Vorrichtung.

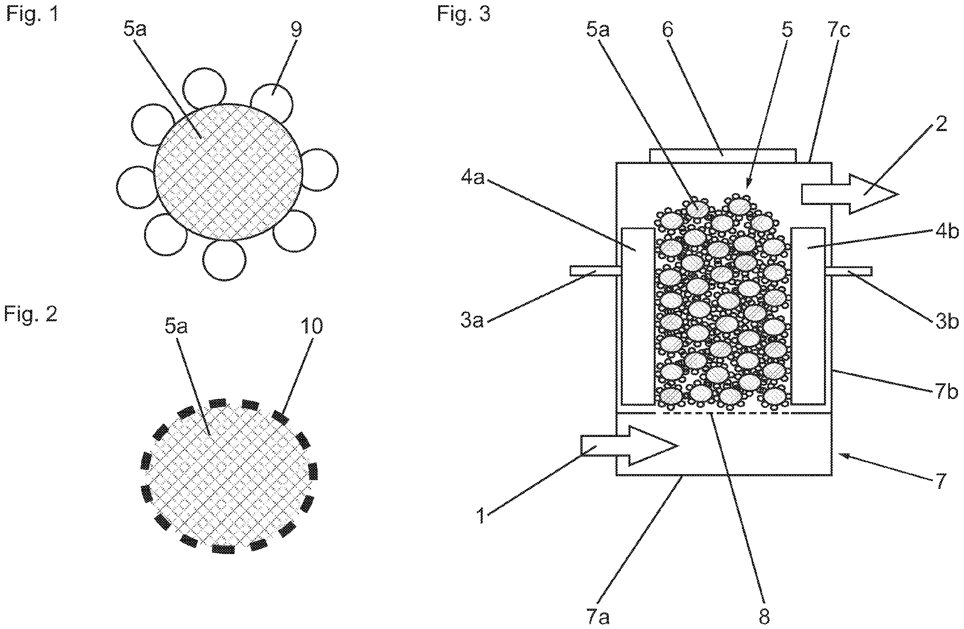

Fig 3 zeigt eine Elektrolysezelle (Elektroflockulationszelle) zur Fällung von in Wasser befindlichen Phosphationen (PO₄³⁻), wobei die dazu erforderlichen Metallionen, insbesondere Fe³⁺ und Al³⁺, durch Elektrolyse des Wassers unter Verwendung von Metallelektroden, welche Eisen oder Aluminium enthalten, gebildet werden. Positiv geladene Metall- und Wasserstoffionen werden an der Kathode, negativ geladene an der Anode entladen, abgeschieden und gehen mit den im Wasser befindlichen Phosphationen Verbindungen ein, die ausflocken und eliminiert werden können.

Die in Fig. 3 gezeigte Vorrichtung weist ein Gehäuse 7 aus einem elektrisch isolierenden Material, beispielsweise aus Polypropylen auf, welches zylinderförmig, quaderförmig und dergleichen ausgeführt sein kann und einen Boden 7a, einen Mantel 7b und eine Oberseite 7c aufweist. Nahe des Bodens 7a ist parallel zu diesem eine Siebplatte 8 angeordnet, welche ebenfalls aus einem elektrisch isolierenden Material, beispielsweise Polypropylen, besteht. Zwischen der Siebplatte 8 und dem Boden 7a befindet sich der in Fig. 3 lediglich angedeutete Zufluss 1 für das zu behandelnde Wasser. Im Gehäuse 7 sind nahe der Innenseite des Mantels 7b zwei plattenförmige Kontaktierungselektroden 4a, 4b angeordnet, von welchen zur elektrischen Kontaktierung elektrische Leiter 3a, 3b aus dem Gehäuse 7 nach außen geleitet sind. Der Behälter 7 weist an seiner Oberseite 7c eine mittels eines Deckels 6 verschließbare Öffnung auf. Im oberen Bereich des Gehäuses 7 befindet sich der in Fig. 3 angedeutete Abfluss 2. Im Inneren des Gehäuses 7 ist zwischen den Elektroden 3a, 3b eine von der Siebplatte 8 getragenen Schüttung aus einem Metallgranulat 5 eingebracht, welches aus Metallpartikeln 5a besteht, welche einen mittleren Durchmesser von 10 mm bis 20 mm aufweisen und von einander elektrisch isoliert sind, dabei jedoch ungehindert von Wasser anströmbar sind.

Fig. 1 zeigt ein Metallpartikel 5a, an welchem kleine Kunststoffteilchen 9 unter gegenseitigen Abständen anhaften, sodass die Kunststoffteilchen 9 in der Schüttung zwischen den einzelnen Metallpartikeln 5a isolierende Abstandhalter bilden. Die Kunststoffteilchen 9, welche wesentlich kleiner als die Metallpartikel 5a sind, weisen beispielsweise einen mittleren Durchmesser von 10 % bis 20 % des mittleren Durchmesser der Metallpartikel 5a auf. Die Kunststoffteilen 9 bestehen aus einem elektrisch isolierenden, thermoplastischen Kunststoff, beispielsweise Polypropylen oder Polyethylen. Die Kunststoffteilchen 9 werden an den Metallpartikeln 5a beispielsweise derart angebracht, dass ein erhitztes Kunststoffgranulat mit den Metallpartikeln 5a in Kontakt gebracht wird, wobei die Kunststoffteilchen 9 an den Metallpartikeln 5a anschmelzen und derart anhaften.

Eine weitere Ausführungsvariante von elektrisch isolierenden Abstandhaltern zwischen den Metallpartikeln 5a zeigt Fig. 2. Jedes Metallpartikel 5a ist von einem verschweißten Kunststoffgitter 10 ummantelt.

Die Metallpartikel 5a wirken in der Elektrolysezelle als bipolare Elektroden, welche an der anodischen Seite Metallionen ans Wasser abgeben. Die Metallpartikel 5a sind daher Opferanoden, welche nach einer gewissen Betriebsdauer ausgetauscht werden müssen, was bei sämtlichen beschriebenen erfindungsgemäßen Ausführungen über die mit dem Deckel 6 verschließbare Öffnung ohne weiteres möglich ist.

Um zu verhindern, dass die Kontaktierungselektroden 4a, 4b durch Kalkanlagerungen inaktiv werden, werden insbesondere idente Metallelektroden verwendet, welche in regelmäßigen Abständen umgepolt werden. Es ist ferner von Vorteil, die Elektrodenanordnung mit 50 Hz Wechselstrom zu versorgen, wodurch nur sehr kleine und praktisch unsichtbare Kalkpartikel entstehen, welche mit dem Wasserstrom den Elektrodenraum verlassen. Darüber hinaus ist 50 Hz Wechselstrom über einfache Transformatoren aus dem Stromnetz kostengünstig verfügbar. Gleichstrom erfordert Gleichrichtereinheiten, welche Energieverluste verursachen, sowie den Einsatz von Umpoleinheiten, welche im Allgemeinen wartungsintensiv sind.

Um eine effiziente und wirkungsvolle Phosphationenbindung zu erzielen, ist eine gleichmäßige Verteilung der in Lösung gebrachten Metallionen von Vorteil. Durch die Schüttung aus bipolaren Elektroden werden daher große Wassermengen mittels einer nicht dargestellten Pumpe befördert, sodass eine gute Durchmischung des Wasser in der Schüttung erzielt wird. Beim Einsatz von Wechselspannung werden an etwa zwei Drittel der Oberflächen der Metallpartikel 5a Metallionen proportional zu der angelegten Spannung freigesetzt. Bei einem Einsatz von Gleichstrom oder langsam umgepolten Gleichstrom werden etwa an einem Drittel der Oberflächen der Metallpartikel 5a Metallionen freigesetzt.

Als Elektrodenmaterialen und Materialien für die Metallpartikel 5a des Metallgranulats 5 kommen vorzugsweise Eisen und Aluminium oder Legierungen dieser Elemente in Frage. Soll eine Konservierung, Desinfektion, Algenbekämpfung oder Düngung des Wassers erfolgen, kann in das Material für die Metallpartikel 5a und/oder die Elektroden 4a, 4b je nach erwünschtem Effekt Kupfer, Silber, Kalzium, Magnesium, Lanthan oder ein Spurenelement eingearbeitet sein. Alternativ dazu können diese Elemente in separaten Partikeln in die Schüttung eingebracht werden. Es ist auch möglich, in die Metalllegierungen Nichtmetalle, organische Verbindungen oder Salze einzuarbeiten, sodass durch die Auflösung der Metallpartikel 5a eine proportionale Dosierung dieser Substanzen erfolgt. Diese Maßnahmen ermöglichen beispielsweise das Einbringen von Stickstoff- oder Kohlenstoffverbindungen, insbesondere wenn in Kombination mit der Phosphationenbindung durch Eisen/Aluminium auch biologisch gefiltert werden soll.

Erfindungsgemäße Elektrolysezellen bzw. Elektroflockulationszellen lassen sich vielfältig einsetzen. In kommunalen Kläranlagen bringt der Einsatz erfindungsgemäß ausgeführter Elektrolysezellen erhebliche Vorteile bezüglich Wartung und Energieeffizienz gegenüber den bislang üblichen Elektroflockulationszellen. Speziell für hohe Durchflussmengen an Wasser ist die erfindungsgemäße Technik interessant, da die Dimensionierung ohne besonderen Aufwand beliebig gewählt werden kann. In einer entsprechend gesicherten Anordnung kann für diesen Anwendungsfall auch direkt 230 Volt 50 Hz Wechselstrom verwendet werden.

Erfindungsgemäße Elektrolysezellen können ferner als mobile Einheiten zur Aufbereitung von Füllwasser für die Befüllung von Swimmingpools, Schwimmteichen, Naturpools, Wasserspielen, Gartenteichen und dergleichen verwendet werden. Den Phosphatgehalt des Füllwassers zu reduzieren ist vor allem dann angezeigt, wenn phosphatbelastetes Brunnenwasser oder zum Korrosionsschutz phosphatiertes Leitungswasser zum Einsatz kommt. Die mobile Einheit kann jeweils direkt im Zulauf positioniert werden, sodass das Füllwasser die Elektrolysezelle passiert.

Erfindungsgemäße Vorrichtungen können darüber hinaus als stationäre Einheiten zur Dauerbehandlung in Wasserkreisläufen eingesetzt werden. Es ist bekannt, in phospatbelastete Gewässer, wie künstliche oder natürliche Seen und Baggerteiche, zur Phosphatbindung Eisenoxid einzubringen. Dabei findet eine Zweiphasenreaktion (fest/flüssig) statt und es sind daher große Mengen an Fällungsmittel und lange Verweilzeiten notwendig, um eine zufriedenstellende Entfernung der Phosphate zu erreichen. Nur ein geringer Teil des Eisens ist dabei aktiv. In einer erfindungsgemäßen Vorrichtung sind die anodisch generierten Metallionen sofort in Wasser gelöst, also in der flüssigen Phase, und daher auch sofort aktiv. Die Reaktionszeiten sind somit kurz und es werden nur geringe Mengen benötigt. Um Phosphationen vollständig mit anodisch generierten Eisen- oder Alluminiumionen zu binden, werden nur ca. 5 Mol Metallionen pro 1 Mol Phosphationen benötigt. Stationäre Einheiten zur Phosphationenbindung können vorteilhaft in den Skimmerkreislauf oder die Umwälzeinrichtung von phosphatbelasteten Gewässern eingebunden werden. Eine Kombination mit Reifebehältern und Sandfiltern gemäß dem Stand der Technik ist möglich.

Die Kombination der erfindungsgemäßen Vorrichtung mit einem biologischen Filter ist ebenfalls von Vorteil, da durch die Metallionen hauptsächlich o-Phosphat (PO₄⁻³) gebunden werden kann. Organische Phosphorverbindungen müssen erst durch biologische Prozesse in o-Phosphat umgewandelt werden, um mit einer erfindungsgemäßen Vorrichtung gebunden werden zu können. Der Biofilm in einem biologischen Filter hat die Eigenschaft, kohlenstofftialtige Verbindungen zu veratmen, wobei die Phosphatanteile, welche nicht zum Zellaufbau genutzt werden, in Form von o-Phosphat ausgeschieden werden. Eine Kombination der Vorrichtung gemäß der Erfindung erfolgt daher derart, dass die Elektrolysezelle dem biologischen Filter nachgeschaltet wird.

Die erfindungsgemäße Vorrichtung eignet sich vor allem auch zur Fällung von Phosphaten geringer Konzentrationen, insbesondere von Konzentrationen unter 10µg/l o-PO4-P, und zur Fällung von Phosphaten in alkalischen Wässern.

Gemäß dem Stand der Technik ist die Auslegung von Vorrichtungen zur Metallauflösung für Anwendungen, bei welchen Wässer mit unterschiedlichen Phosphatkonzentrationen behandelt werden sollen, vor allem für die Fällung von geringen Phosphatkonzentrationen, insbesondere in alkalischen Wässern, schwierig.

Eine Vergrößerung der Elektrodenflächen würde zwar zu einer erhöhten Freisetzung von Metallionen führen, es ist aber zur Veränderung der Elektrodenflächen ein mechanisches Eingreifen in die Anlage erforderlich, was mit Personaleinsatz oder mit aufwändigen mechanischen Vorrichtungen verbunden ist.

Grundsätzlich ist es möglich, das Potential oder den Strom zu regeln, um beispielsweise die Anzahl der freigesetzten Eisenionen zu regulieren. Wird die an die Elektroden, welche vom zu behandelten Wasser durchströmt werden, angelegte Spannung bei geringen Phosphatkonzentrationen im Wasser verringert, so verringert sich der Prozentsatz der gefällten Phosphationen drastisch. Ist auch bei geringen Phosphatkonzentrationen ein hoher Wirkungsgrad gefordert, so muss die Menge an freiem, reaktionsfähigem Eisen in der Lösung oder an der Oberfläche der Elektroden hoch gehalten werden.

Während ein mit Gleichstrom beschicktes Bett an voneinander isolierten Metallpartikeln Eisenionen freisetzt, welche praktisch quantitativ in Lösung gehen und dort zum überwiegenden Teil in Eisenhydroxide umgewandelt werden, die in alkalischen Medien ausfallen und Niederschläge bilden, ist es bei Wechselstrom möglich, bereits freigesetzte Eisenionen in der kathodischen Phase an der gleichen Oberfläche wieder zu binden. In der Zeit zwischen anodischer Auflösung und kathodischer Abscheidung stehen die Eisenionen als Reaktionspartner für die Phosphatfällung in großer Zahl zur Verfügung. Auf Grund der schnellen Reaktion des freien ortho-Phosphates mit den hoch reaktiven Eisenionen (schnelle Neutralisationsreaktion) und der geringeren Löslichkeit der Eisenphosphate, kann eine Selektivität der Reaktion mit Phosphat gegenüber der langsamen Bildung von Eisenhydroxidniederschlägen erreicht werden.

Eine Regelung der Frequenz des Wechselstromes erfolgt daher gemäß der Erfindung vorteilhafter Weise in Abhängigkeit des zu erwartenden Phosphatgehaltes der zu behandelnden Lösung, um die Menge an netto aufgelösten Metallionen, beispielsweise Eisen, zu regulieren. Je niedriger die Frequenz ist, desto mehr Eisen wird aufgelöst und nicht mehr abgeschieden. Die zur Phosphatbindung benötigte Menge ist umgekehrt proportional zur Frequenz. Bei geringen Phosphatkonzentrationen und hohen Frequenzen wird daher etwa die gleiche Menge Eisen als Reaktionspartner angeboten, wie bei geringen Frequenzen, jedoch wird der Großteil davon wieder kathodisch gebunden. Um Eisenphosphat abzutransportieren, ist es nötig, den Anteil des in Lösung gegangenen Eisens zu erhöhen.

Insbesondere bei der Behandlung von leicht alkalischen Wässern (pH 7-10) wie sie in Badegewässern (Schwimmteiche, Naturpools, Seen, Flüsse) oder in Kläranlagen auftreten, erhöht die Anwendung von Wechselstrom die Effektivität des Umsatzes der Metallionen mit Phosphat um ein Vielfaches, was zu einer drastischen Einsparung von Eisen führt. Da bei gleicher Fällungsleistung weniger Metall freigesetzt wird, können negative Effekte wie die Ablagerung von Rostflecken in den nachgeschalteten Becken oder Abläufen verhindert werden.

Bei der Behandlung des Wasserablaufs von Kläranlagen vor der Einleitung in den Vorfluter ist es zur Zeit üblich, einen Überschuss des Fällungsmittels zuzugeben, um eine möglichst vollständige Fällung zu erreichen. Dieser Überschuss fällt jedoch auch im Vorfluter selbst noch natürlich auftretende Phosphate und führt so zu einer unerwünschten Absenkung des Phosphatgehalts in Bächen und Flüssen. Ziel der Abwasserbehandlung ist es, keine zusätzlichen Phosphate einzutragen, und nicht durch Metalleintrag die für die Entwicklung der Biologie essentiellen Phosphate des Gewässers selbst zu binden.

Erfindungsgemäß wird daher ein Bett aus gegeneinander isolierten Metallpartikeln, welche als bipolare Elektroden in einem Wechselstromfeld agieren, mit hohen Wassergeschwindigkeiten durchströmt. Je nach Phosphatkonzentration und Anwendung kommen Wechselströme von 1-100 Hertz zur Anwendung. Insbesondere geregelte Netzteile, welche die Regelung der Frequenz im oben genannten Bereich bei unterschiedlichen Phosphatgehalten (mehrere g/l PO4-P bis zu 10µg PO4-P/l) ermöglichen, kommen zum Einsatz.

Die Erfindung ist auf die dargestellten und beschriebenen Ausführungsvarianten nicht eingeschränkt. So ist es beispielsweise möglich, als Material für die isolierenden Abstandhalter zwischen den Metallpartikeln auch Keramikpartikel, die an die Metallpartikel angeheftet, beispielsweise angeklebt, werden, zu verwenden.

### Bezugsziffernliste

- 1...............: Zufluss
- 2 ...............: Abfluss
- 3a .............: Leiter
- 3b .............: Leiter
- 4a .............: Elektrode
- 4b............: .Elektrode
- 5 ...............: Metallgranulat
- 5a .............: Metallpartikel
- 6 ...............: Deckel
- 7...............: Gehäuse
- 7a .............: Boden
- 7b .............: Mantel
- 7c .............: Oberseite
- 8 ...............: Siebplatte
- 9 ...............: Kunststoffteilchen
- 10 .............: Kunststoffgitter

## Patentansprüche

1. Vorrichtung zur Phosphationenbindung in Wasser durch anodische Metallauflösung mit einer in einem Gehäuse (7) befindlichen vom aufzubereitenden Wasser durchströmbaren Elektrolysezelle, in welche zwischen zwei elektrisch kontaktierbaren Elektroden (4a, 4b) ein Bett aus Metallpartikeln (5a) eingebracht ist, welche voneinander durch Abstandhalter aus einem elektrisch isolierenden Material separiert sind,
**dadurch gekennzeichnet,**
**dass** die Metallpartikel (5a) entweder jeweils von einem verschweißten Kunststoffgitter ummantelt sind oder an ihren Oberflächen mit anhaftenden Kunststoffteilchen (9) oder Keramikteilchen versehen sind.

2. Vorrichtung nach Anspruch 1, **dadurch gekennzeichnet, dass** die Metallpartikel (5a) eine lose Schüttung bilden.

3. Vorrichtung nach einem Anspruch 1, **dadurch gekennzeichnet, dass** der Kunststoff Polypropylen oder Polyethylen ist.

4. Vorrichtung nach einem der Ansprüche 1 bis 3, **dadurch gekennzeichnet, dass** die Schüttung aus Metallpartikeln (5a) von einer im Gehäuse gehaltenen Siebplatte (8) getragen ist, welche aus einem elektrisch isolierenden Material besteht.

5. Vorrichtung nach einem der Ansprüche 1 bis 4, **dadurch gekennzeichnet, dass** die Metallpartikel (5a) und die Elektroden (4a, 4b) zumindest eines der Elemente Eisen oder Aluminium enthalten.

6. Vorrichtung nach einem der Ansprüche 1 bis 4, **dadurch gekennzeichnet, dass** die Metallpartikel (5a) und/oder die Elektroden (4a,4b) eines oder mehrere der Metalle Kalzium, Lanthan, Magnesium, Kupfer oder Silber oder eine Legierung dieser Metalle enthalten.

7. Vorrichtung nach einem der Ansprüche 1 bis 6, **dadurch gekennzeichnet, dass** die Metallpartikel (5a) und/oder die Elektroden (4a,4b) zumindest ein Nichtmetall, insbesondere Stickstoff oder Kohlenstoff, oder zumindest eine organische Kohlenstoffverbindung oder zumindest ein organisches oder anorganisches Salz enthalten.

8. Vorrichtung nach Anspruch 1, **dadurch gekennzeichnet, dass** die Elektroden (4a, 4b) mit Wechselstrom oder umgepoltem Gleichstrom versorgt werden.

9. Vorrichtung nach Anspruch 8, **dadurch gekennzeichnet, dass** die Metallpartikel (5a) insbesondere Eisen beinhalten und die Wechselstromfrequenz in Abhängigkeit vom Phosphatgehalt des Wassers variiert wird.

10. Vorrichtung nach Anspruch 8 oder 9, **dadurch gekennzeichnet, dass** die Wechselstromfrequenz zwischen 1 Hz und 100 Hz einstellbar ist.

11. Verfahren zur Phosphationenbindung in Wasser durch anodische Metallauflösung unter Verwendung einer vom aufzubereitenden Wasser durchströmbaren Elektrolysezelle, in welcher sich zwischen den elektrisch kontaktierten Elektroden (4a, 4c) eine Schüttung aus Metallpartikeln (5a) befindet, welche vom Wasser anströmbar und voneinander durch Abstandhalter aus einem elektrisch isolierenden Material separiert sind,
**dadurch gekennzeichnet,**
**dass** die Metallpartikel (5a) entweder jeweils von einem verschweißten Kunststoffgitter ummantelt sind oder an ihren Oberflächen mit anhaftenden Kunststoffteilchen (9) oder Keramikteilchen versehen sind,
und **dass** die Elektroden (4a, 4c) mit Wechselstrom versorgt werden, wobei die Wechselstromfrequenz in Abhängigkeit vom Phosphatgehalt des Wassers variiert wird.

12. Verfahren nach Anspruch 11, **dadurch gekennzeichnet, dass** die Wechselstromfrequenz zwischen 1 Hz und 100 Hz einstellbar bzw. variierbar ist.

## Claims

1. Device for binding phosphate ions in water by means of anodic metal solution with an electrolyte cell located in a housing (7), through which water to be treated can flow, into which a bed of metal particles (5a) is inserted between two electrically contactable electrodes (4a, 4b) which are separated from each other by a distancer made of an electrically isolated material,
**characterised in that**,
the metal particles (5a) are each either encased by a welded plastic mesh or equipped with adhesive plastic particles (9) or ceramic particles in their surfaces.

2. Device according to claim 1, **characterised in that** the metal particles (5a) form a loose fill.

3. Device according to claim 1, **characterised in that** the plastic is polypropylene or polyethylene.

4. Device according to one of the claims 1 to 3, **characterised in that** the fill of metal particles (5a) is supported by a sieve plate (8) held in the housing, which consists of an electrically isolated material.

5. Device according to one of the claims 1 to 4, **characterised in that** the metal particles (5a) and the electrodes (4a, 4b) contain at least one of the elements iron or aluminium.

6. Device according to one of the claims 1 to 4, **characterised in that** the metal particles (5a) and/or the electrodes (4a,4b) contain one or more of the metals calcium, lanthanum, magnesium, copper or silver or an alloy of these metals.

7. Device according to one of the claims 1 to 6, **characterised in that** the metal particles (5a) and/or the electrodes (4a,4b) contain at least one non-metal, in particular nitrogen or carbon, or at least one organic carbon compound or at least one organic or inorganic salt.

8. Device according to claim 1, **characterised in that** the electrodes (4a, 4b) are supplied with alternate current or reverse-poled direct current.

9. Device according to claim 8, **characterised in that** the metal particles (5a) in particular include iron and the alternate current frequency is varied depending on the phosphate content of the water.

10. Device according to claim 8 or 9, **characterised in that** the alternate current frequency can be set between 1 Hz and 100 Hz.

11. Method for binding phosphate ions in water by means of anodic metal solution using an electrolyte cell through which water to be treated can flow, in which a bed of metal particles (5a) is located between two electrically contactable electrodes (4a, 4b), through which water can flow and which are separated from each other by a distancer made of an electrically isolating material,
**characterised in that**,
the metal particles (5a) are either each encased by a welded plastic mesh or are equipped with adhesive plastic particles (9) or ceramic particles on their surfaces, and **in that** the electrodes (4a, 4b) are supplied with alternate current, wherein the alternate current frequency is varied depending on the phosphate content of the water.

12. Method according to claim 11, **characterised in that** the alternate current frequency can be set or varied between 1 Hz and 100 Hz.

## Revendications

1. Dispositif de liaison ionique phosphate dans l'eau par dissolution de métal anodique avec une cellule électrolytique, pouvant être traversée par de l'eau à traiter, se trouvant dans un boîtier (7), dans lequel un lit de particules métalliques (5a) est déposé entre les deux électrodes (4a, 4b) mises en contact électrique, lesdites particules étant séparées entre elles par un écarteur en matériau isolant électrique,
**caractérisé en ce que**
les particules métalliques (5a) sont soit enveloppées respectivement d'un treillis en plastique soudé, soit prévues avec des particules de matière plastique (9) adhérentes ou des particules de céramique sur leur surface.

2. Dispositif selon la revendication 1, **caractérisé en ce que** les particules métalliques (5a) forme un remblayage en vrac.

3. Dispositif selon la revendication 1, **caractérisé en ce que** la matière plastique est du polypropylène ou du polyéthylène.

4. Dispositif selon l'une des revendications 1 à 3, **caractérisé en ce que** le remblayage en particules métalliques (5a) est porté par un tamis (8) maintenu dans le boîtier, ledit tamis est composé d'un en matériau isolant électrique.

5. Dispositif selon l'une des revendications 1 à 4, **caractérisé en ce que** les particules métalliques (5a) et les électrodes (4a, 4b) comprennent au moins un des éléments de fer ou d'aluminium.

6. Dispositif selon l'une des revendications 1 à 4, **caractérisé en ce que** les particules métalliques (5a) et/ou les électrodes (4a, 4b) comprennent un ou plusieurs des métaux calcium, lanthane, magnésium, cuivre ou argent ou un alliage de ces métaux.

7. Dispositif selon l'une des revendications 1 à 6, **caractérisé en ce que** les particules métalliques (5a) et/ou les électrodes (4a, 4b) comprennent au moins un non-métal, en particulier de l'azote ou du carbone, ou au moins un composé de carbone organique ou au moins un sel organique ou anorganique.

8. Dispositif selon la revendication 1, **caractérisé en ce que** les électrodes (4a, 4b) sont alimentées en courant alternatif ou en courant continu inversé.

9. Dispositif selon la revendication 8, **caractérisé en ce que** les particules métalliques (5a) contiennent notamment du fer et la fréquence du courant alternatif varie en fonction de la teneur en phosphate dans l'eau.

10. Dispositif selon la revendication 8 ou 9, **caractérisé en ce que** la fréquence du courant alternatif est réglable entre 1 Hz et 100 Hz.

11. Procédé de liaison ionique phosphate dans l'eau par dissolution de métal anodique en utilisant une cellule électrolytique, pouvant être traversée par de l'eau à traiter, dans lequel un remblayage de particules métalliques (5a) est déposé entre les deux électrodes (4a, 4c) mises en contact électrique, lesdites particules sont écoulées par l'eau et séparées entre elles par un écarteur en matériau isolant électrique,
**caractérisé en ce que**
les particules métalliques (5a) sont soit enveloppées respectivement d'un treillis en plastique soudé, soit prévues avec des particules de matière plastique (9) adhérentes ou des particules de céramique sur leur surface, et **en ce que** les électrodes (4a, 4c) sont alimentées en courant alternatif, la fréquence du courant alternatif variant en fonction de la teneur en phosphate dans l'eau.

12. Procédé selon la revendication 11, **caractérisé en ce que** la fréquence du courant alternatif est réglable ou variable entre 1 Hz et 100 Hz.
